# EUROPÄISCHE PATENTSCHRIFT

(11) **EP 3 542 634 B1**
(45) Veröffentlichungstag und Bekanntmachung des Hinweises auf die Patenterteilung: **30.06.2021**
(21) Anmeldenummer: 18163033.6
(22) Anmeldetag: 21.03.2018
(51) Int. Cl.: A23C 9/142, A23C 9/144, A23C 9/15, A23J 1/20, A23J 3/08, A23C 1/04, A23C 1/12, A23C 1/14

(54) **MILCHPROTEINKONZENTRATE MIT VERMINDERTEM ASCHEGEHALT**
MILK PROTEIN CONCENTRATES WITH REDUCED ASH CONTENT
PROTEINES DU LAIT CONCENTRÉS AVEC TENEUR DU CENDRE REDUITE

(43) Veröffentlichungstag der Anmeldung: 25.09.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- DE-T2- 69 919 019
- US-A- 3 320 072
- US-A1- 2016 044 932
- US-A1- 2016 205 960
- Miloslav Kalab ET AL: "Food Structure Composition and Structure of Demineralized Spray-Dried Milk Permeate Powder COMPOSITION AND STRUCTURE OF DEMINERALIZED SPRAY-DRIED MILK PERMEATE POWDER", Food Structure FOOD STRUCTURE, 1. Januar 1991 (1991-01-01), Seiten 327-332, XP055491805, Gefunden im Internet: URL:https://pdfs.semanticscholar.org/01a9/ 339480c9a0840a6b281992c22cf3c847ce52.pdf [gefunden am 2018-07-13]
- Anonymous: "Skim Milk Powder", , 3. Juni 2017 (2017-06-03), Seiten 1-7, XP055492477, Gefunden im Internet: URL:http://www.milkingredients.ca/index-en g.php?id=192 [gefunden am 2018-07-13]

## Beschreibung

### GEBIET DER ERFINDUNG

Die Erfindung befindet sich auf dem Gebiet der Milchprodukte und betrifft ein Verfahren zur Herstellung von Proteinkonzentraten, die sich gleichzeitig durch einen definierten Lactose- und einen geringen Aschegehalt auszeichnen.

### STAND DER TECHNIK

Die Herstellung von Milchproteinkonzentraten erfolgt in der Regel ausgehend von Magermilch, die in mehreren, vorzugsweise zwei Stufen bis auf eine Trockenmasse von rund 50 Gew.-% entwässert wird, bevor das Konzentrat dann in der Regel auf einen Sprühturm gegeben wird. Hierzu werden klassisch Eindampfer mit mechanischer oder thermischer Brüdenverdichtung eingesetzt. Neuerdings werden teilweise RO-Membrananlagen zu Vorkonzentierung verwendet, hierbei können Trockenmassen von bis zu 36% erreicht werden.

Das bei der weiteren Entwässerung zwischenzeitlich anfallende Konzentrat weist jedoch einen zu hohen Eiweißgehalt auf und muss daher durch Zugabe von Lactose oder lactosehaltigen Milchfraktionen angehoben, d.h. "standardisiert" werden. Hintergrund ist hier ein starkes Nord-Süd-Gefälle in Europa. Ein Magermilchpulver aus dem Norden weist typisch einen Eiweißgehalt von bis zu 38% in der Trockenmasse auf, während entsprechende Pulver aus dem Süden Europas nur etwa 33 Gew.-% Eiweiß in der Trockenmasse enthalten. von Um Wettbewerbsverzerrungen zu vermeiden ist der Eiweißgehalt in solchen Milchpulver per Verordnung auf 34 Gew.-% in der fettfreier Trockenmasse festgesetzt worden, was jedoch bedeutet, dass ein Produkt mit geringerem Eiweißgehalt in der EU nicht mehr als Magermilchpulver, sondern nur noch als Milcherzeugnis bezeichnet werden darf.

Zur Standardisierung bietet es sich an, dem Konzentrat die benötigte Menge Lactose als solche zuzusetzen. Dies ist sicher die einfachste Möglichkeit und auch deshalb durchaus von Vorteil, weil damit der Eintrag an Asche - die den Geschmack der Milch nachteilig beeinflusst - mit rund 7 Gew.-% bezogen auf das letztlich hergestellte Proteinkonzentrat sensorisch vertretbar ist. Von Nachteil ist jedoch, dass diese Variante auch gleichzeitig die teuerste ist, weil die Lactose zunächst aufwendig getrocknet werden muss, um dann wieder aufgelöst und abermals getrocknet zu werden.

Stattdessen wird in der Molkereitechnik ein lactosehaltiger Milchstrom, nämlich ein sogenanntes Milchpermeat eingesetzt. Auch auf diese Weise lässt sich eine Standardisierung problemlos erreichen, zumal das Permeat auch noch flüssig vorliegt und daher leicht dosiert werden kann. Vorteilhaft ist hierbei, dass Milchpermeate ansonsten wenig kommerziellen Nutzen haben und umgerechnet auf den Lactosegehalt deutlich billiger als die wohlfeile Lactose selbst sind, was der Prozessökonomie zu Nutzen kommt. Nachteilig ist jedoch, dass der Ascheeintrag deutlich höher ist (mindestens 8 Gew.-% im Proteinkonzentrat), was den Geschmack des Milchpulvers ganz erheblich beeinträchtigt.

### Relevanter Stand der Technik

Milchpulver mit hohem Molkenproteinindex sind beispielsweise aus der EP 2732706 B1 (DMK) bekannt und werden erhalten, indem man (a) Rohmilch in an sich bekannter Weise von Feststoffen befreit, den Rahm abtrennt, (b) die so erhaltene Magermilch einer Infusionserhitzung unterwirft, (c) die erhitzte Milch auf eine Trockenmasse von 30 bis 50 Gew.-% konzentriert, (d) gegebenenfalls das so erhaltene Konzentrat einer Temperaturbehandlung über einen Zeitraum von mindestens 15 Sekunden bei mindestens 72 °C unterwirft, und (e) das so erhaltene temperaturbehandelte Produkt zu einem trockenen Pulver verarbeitet.
In diesem Zusammenhang sei auch auf die EP 3103350 A1 (DMK) hingewiesen, aus der ein Verfahren zur Herstellung von Molkenproteinkonzentraten bekannt ist, welches die folgenden Schritte umfasst: (a) Ultrafiltration von Molke bei einer Temperatur von etwa 2 bis etwa 25 °C zur Erzeugung eines ersten Retentats R1 und eines ersten Permeats P1; (b) Mikrofiltration des Retentats R1 aus Schritt (a) bei einer Temperatur von etwa 2 bis etwa 35 °C zur Erzeugung eines zweiten Retentats R2 und eines zweiten Permeats P2; (c) Ultrafiltration des zweiten Permeats P2 aus Schritt (b) bei einer Temperatur von etwa 6 bis etwa 25 °C zur Erzeugung eines dritten Retentats R3 und eines dritten Permeats P3; (d) Pasteurisierung des Retentats R3 aus Schritt (c) sowie (e) Trocknung des pasteurisierten Produktes aus Schritt (d).

Aus der EP 3221554 A1 (DMK) ist ein demineralisiertes proteinreiches Molkepulver bekannt, welches dadurch erhältlich ist, dass man: (a) Rohmilch separiert und den Rahm abtrennt; (b) die so erhaltene Magermilch einer Mikro- oder Mikrodiafiltration unterwirft und dabei ein molkenproteinreiches Permeat P1 und ein Casein und GMP enthaltendes Retentat R1 erhält; (c) das Permeat P1 einer säulenchromatographischen Trennung unterwirft, bei der das darin enthaltene Lactoferrin auf der Säule verbleibt (d) das so von Lactoferrin befreite Permeat einer Dialyse unterwirft; und (e) das so erhaltene Diluat von Wasser befreit.

Das Dokument DE 699 19 019 T2 offenbart ein Verfahren zur Herstellung einer Kindernahrungsmittelzusammensetzung, deren Aminosäurenzusammensetzung der der menschlichen Milch ähnlich ist, auf der Grundlage eines von Molke stammenden Milchausgangsmaterials, dadurch gekennzeichnet, dass man eine Proteinzusammensetzung herstellt, indem man eine tierische Milch einer Mikrofiltration über eine Membran mit der Porosität von 0,1 bis 0,2 µm so aussetzt, dass man ein Permeat erhält, das Mikrofiltrationspermeat konzentriert wird, und das konzentrierte Permeat durch Elektrodialyse entmineralisiert. Das entmineralisierte Permeat wird dann mit dem in der Mikrofiltration gewonnenen Retentat gemischt und das erhaltene Produkt durch Sprühtrocknung getrocknet.

Das Dokument US 2016/0205960 A1 offenbart ein Verfahren, welches folgende Schritte umfasst:
(a) Mikrofiltration (MF) von tierischer Magermilch über einer Membran mit einer Porosität von 0,10 - 0,35 Mikrometer und einem Volumenkonzentrationsfaktor von 1,5 - 8, was zu einem Retentat (MFR) und einem Permeat (MFP) führt;
(b) Ultrafiltration (UF) des aus Schritt (a) stammenden MFP über einer Membran von höchstens 25 kDa und einem Volumenkonzentrationsfaktor von 1,5 - 8, was zu einem Retentat (UFR) führt und ein Permeat (UFP);
(c) Kombinieren der aus Schritt (a) stammenden MFR und der aus Schritt (b) stammenden UFR, wodurch eine Zusammensetzung mit einem Gewichtsverhältnis von Casein / Molkeprotein von 20/80 - 70/30 erhalten wird.

Das Dokument US 3,320,072 offenbart ein Verfahren zur Herstellung von Säuglingsnahrungsprodukten, welche Zusammensetzung praktisch identisch mit der von natürlicher Muttermilch sein muss. Gemäß dem in diesem Dokument beschriebenen Verfahren werden einerseits Magermilch und andererseits Molkepulver einer Elektrodialyse unterworfen.

Das Dokument US 2016/0044932 A1 offenbart ein Verfahren zur Herstellung von Kleinkindnahrung in Pulverform. Das Verfahren umfasst folgende Schritte:
(a-i) Ultrafiltration (UF) einer tierischen Magermilchzusammensetzung, umfassend 70 bis 90 Gew .-% Casein und 10 bis 30 Gew .-% Molkeproteine bezogen auf die Gesamtproteine, und
(a-ii) Ultrafiltration einer tierischen Molkezusammensetzung, umfassend 0 bis 25 Gew .-% Casein und 75 bis 100 Gew .-% Molkeproteine bezogen auf die Gesamtproteine; oder
(a-iii) Ultrafiltration eines Gemisches der Zusammensetzungen von (a-i) und (a-ii),
(b) vorzugsweise Kombinieren des aus Schritt (a-i) stammenden UF-Retentats mit dem aus Schritt (a-ii) stammenden UF-Retentat;
(c) Entfernen von mehrwertigen Ionen aus dem UF-Permeat, das aus Schritt (a-i) und/oder (a-ii) oder (a-iii) stammt, um mindestens ein UF-Permeat zu erhalten;
(d) Kombinieren des UF-Permeats, das aus Schritt (c) stammt, mit einem UF-Retentat, das aus Schritt (ai) und/oder (a-ii) oder (a-iii) oder (b) stammt, um ein Zwischenprodukt zu erhalten; und
(e-i) Trocknen des aus Schritt (d) Zwischenprodukts, um eine Trockenmilchformel zu erhalten, und/oder
(e-ii) Trocknen eines aus Schritt (ai) und / oder (a-ii) oder (a-iii) oder (b) stammenden UF-Retentats, das in Schritt (d) nicht kombiniert wird, und Trocknen eines des UF aus Schritt (c) stammende Permeate, die in Schritt (d) nicht kombiniert werden, gefolgt von Kombinieren des getrockneten UF-Retentats mit dem getrockneten erweichten UF-Permeat, um eine Trockenmilchformulierung zu erhalten.

Keine der genannten Schriften beschäftigt sich indes mit der Herstellung von Milchproteinkonzentraten der genannten Art.

Die Aufgabe der vorliegenden Erfindung hat daher darin bestanden, Milchproteinkonzentrate in Pulverform vorzugsweise auf Basis von Magermilch zur Verfügung zu stellen, die einen Proteingehalt von mindestens 34 Gew.-% und einen Lactosegehalt von 45 bis 60 Gew.-% aufweisen, während der Aschegehalt bei maximal 7,5 Gew.-% liegt.

### BESCHREIBUNG DER ERFINDUNG

Gegenstand der Erfindung ist ein Verfahren zur Herstellung von Magermilchproteinkonzentraten, umfassend oder bestehend aus den folgenden Schritten:
(i) Bereitstellen einer Magermilch mit einer Trockenmasse von 5 bis 15 Gew.-% und insbesondere 10 Gew.-%;
(ii) Aufkonzentrieren der Magermilch aus Schritt (i) auf eine Trockenmasse von 45 bis 60 Gew.-%;
(iii) Standardisieren des Magermilchkonzentrats aus Schritt (ii) mit einer Milchfraktion; sowie
(iv) Trocknen des standardisierten Magermilchkonzentrats aus Schritt (iii) unter Erhalt eines Magermilchproteinkonzentrats mit einer Trockenmasse von mindestens 95 Gew.-%,
welches sich dadurch auszeichnet, dass man zur Standardisierung ein Milchpermeat, welches durch Ultrafiltration von Milch gewonnen wird, einsetzt, welches zuvor einer Elektrodialyse unterworfen worden ist,
wobei das erhaltene Magermilchproteinkonzentrat einen Proteingehalt von mindestens 34 Gew.-%, einen Lactosegehalt von 45 bis 60 Gew.-% und einen Aschegehalt von maximal 7,5 Gew.-% aufweist.

Überraschenderweise wurde gefunden, dass durch diese Maßnahmen ein Proteinkonzentrat erhalten wird, das den eingangs geschilderten Anforderungen voll entspricht, d.h. in der fettfreien Trockenmasse einen Proteingehalt von mindestens 34 Gew.-% sowie einen Lactosegehalt von etwa 45 bis etwa 60 Gew.-% und einen Aschegehalt von maximal 7,5 vorzugsweise etwa 6,5 bis etwa 7,2 Gew.-% aufweist.

### HERSTELLVERFAHREN

Das erfindungsgemäße Verfahren kann sowohl von Rohmilch als auch von Magermilch ausgehen, da der erste Verfahrensschritt ohnehin darin besteht eine Magermilch zur Verfügung zu stellen, die eine Trockenmasse im Bereich von etwa 5 bis 15 Gew.-% und insbesondere 9 bis 10 Gew.-%aufweist. Hierbei handelt es sich in aller Regel um eine Standardmagermilch, die nach Abtrennung des Rahms von der Rohmilch im Separator anfällt und in der Regel eine Trockenmasse von rund 30 Gew.-% aufweist.

### Konzentrierung

Die so erhaltene Magermilch wird anschließend in einem konventionellen Eindampfer von einem weiteren teil Wasser befreit, wobei ein Konzentrat mit einer Trockenmasse im Bereich von 45 bis 60 Gew.-% und typisch etwa 50 Gew.-% erhalten wird.

### Standardisierung

Wie eingangs erwähnt, weist das so erhaltene Magermilchkonzentrat für die spätere Anwendung speziell im Bereich der Milchpulver für Kleinkinder einen zu hohen Aschewert auf, so dass an dieser Stelle eine Standardisierung erforderlich wird. Hierzu wird dem Konzentrat ein lactosehaltiger Milchstrom, nämlich ein Milchpermeat zugesetzt. Es handelt sich dabei um ein Milchpermeat, das durch Ultrafiltration von Milch, also Rohmilch, Vollmilch oder Magermilch, erhalten wird.

Die Standardisierung, also die Zugabe des Diluats, kann an unterschiedlichen Stellen des Verfahrens erfolgen, beispielsweise kann es schon der Milch vor oder nach dem Anwärmen, d.h. noch vor der Separation beigemischt werden. Ebenso ist es möglich, das Diluat vor der Pasteurisierung oder einem der Konzentrierungsschritte zuzugeben.

### Ultrafiltration

Die Ultrafiltration stellt ein Filtrationsverfahren aus dem Bereich der Membrantechnik dar, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off'*) bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO*, Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Unter diesen Bedingungen treten bei der Ultrafiltration von Milch sowohl die Lactose als auch die Asche und die Mineralstoffe durch die Membran und reichert sich im Permeat an.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration im Sinne der vorliegenden Erfindung "heiß" oder "kalt", d.h. im Temperaturbereich von etwa 10 bis etwa 60 °C durchgeführt werden. Bevorzugt ist es jedoch, bei Temperaturen im niedrigen Bereich von etwa 10 bis etwa 20 °C zu arbeiten.

### Elektrodialyse

Das Permeat aus der Ultrafiltration der Rohmilch ist zwar lactosereich, enthält jedoch auch einen hohen Anteil an Asche, d.h. mineralischen Bestandteilen, die das resultierende Milchpulver schließlich bitter machen. Es hat sich nun erwiesen, dass die Elektrodialyse ein einfaches und kostengünstiges Verfahren darstellt, um den Aschegehalt im Permeat soweit abzureichern, dass im Endprodukt nur noch Werte von maximal 7,5 Gew.-% und insbesondere 6,5 bis 7,2 Gew.-% erreicht werden, was zu keinem auffälligen Bittergeschmack mehr führt.

Bei der Elektrodialyse handelt es sich um einen elektrochemisch getriebenen Membranprozess, in dem lonenaustauschermembranen in Kombination mit einer elektrischen Potentialdifferenz benutzt werden, um ionische Spezies von ungeladenen Lösungsmitteln oder Verunreinigungen abzutrennen.

Dazu wird in einem Elektrodialyse-Separator der Raum zwischen zwei Elektroden durch einen Stapel aus einander abwechselnden Anionen- und Kationenaustauschermembranen getrennt. Jedes Paar lonenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum Konzentrat vereint, während die salzarmen Lösungen das Diluat bilden.

Es empfiehlt sich, dass man das Diluat abschließend mit einem Kationenaustauscher ("Polisher") behandelt und insbesondere mit der Dialyse eingeschleppte Natriumionen wieder abtrennt.

Das so erhaltene dialysierte Ultrafiltrations-Milchpermeat ("UF-Permeat") wird dem Magermilchkonzentrat anschließend in einer solchen Menge zugesetzt, dass der erforderliche und gewünschte Lactosegehalt von etwa 45 bis etwa 60 Gew.-% - bezogen auf das getrocknete Endprodukt - erreicht wird.

### Trocknung

Im abschließenden Verfahrensschritt wird das Produkt getrocknet. Vorzugsweise kommt dabei die Sprühtrocknung zum Zuge, wobei die Temperatur im Einlass typischerweise etwa 180 bis etwa 260 °C und am Ausgang etwa 80 bis etwa 105 °C beträgt. Die Fraktion bedarf daher keiner Kühlung bevor sie in den Sprühturm gelangt. Temperaturen von 60 bis 70 °C sind dabei sogar bevorzugt, da auf diese Weise die Gefahr verringert wird, dass die Proteine denaturieren. Alternativ können die Produkte auch durch Gefriertrocknung entwässert werden.

Dem Produkt können vor, vorzugsweise aber nach dem Trocknen auch weitere Zusatzstoffe zugesetzt werden, wie beispielsweise Lactoferrin, Lecithine, Vitamine oder Lebensmittelemulgatoren und dergleichen.

### BEISPIELE

### Vergleichsbeispiel V1A

### Herstellung eines UF-Permeats

500 L Milch wurden pasteurisiert und bei 25 °C einer Ultrafiltration mit einer Polymermembran unterworfen, die eine Porengröße von 10.000 Dalton aufwies. Das Retentat wurde separat weiterverarbeitet und das Permeat im Weiteren für die Standardisierung verwendet wurde.

### Vergleichsbeispiel V1B

### Herstellung eines Proteinkonzentrats mit üblichem Aschegehalt

1.000 L Magermilch mit einer Trockenmasse von 9 Gew.-% wurde in einen Eindampfer gegeben und schonend bei etwa 70 °C auf eine Trockenmasse von 50 Gew.-% aufkonzentriert. Dem Konzentrat wurde das Permeat aus Beispiel V1A in einer solchen Menge zugegeben, dass bezogen auf die Trockenmasse ein Eiweißgehalt von 34 Gew.-% und ein Lactosegehalt von 50 Gew.-% erreicht wurde. Anschließend wurde das standardisierte Milchkonzentrat auf einen Sprühturm gegeben und bei 220 °C getrocknet. Das resultierende Pulver zeigte folgende Zusammensetzung:
Trockenmasse: 95,6 Gew.-%
Proteingehalt bezogen auf Trockenmasse: 34,1 Gew.-%
Lactosegehalt bezogen auf Trockenmasse: 51,3 Gew.-%
Aschegehalt bezogen auf Trockenmasse: 8,4 Gew.-%

75 g des Pulvers wurden bei 20°C in 100 g Wasser aufgelöst und homogenisiert. Das Produkt zeigte einen bitteren Geschmack mit einer adstringierenden Note.

### Beispiel 1A

### Herstellung eines dialysierten UF-Permeats

500 L Milch wurden pasteurisiert und bei 25 °C einer Ultrafiltration mit einer Polymermembran unterworfen, die eine Porengröße von 10.000 Dalton aufwies. Das Retentat wurde separat weiterverarbeitet und das Permeat auf einen Elektrodialyse-Separator gegeben. Dabei wurde ein lactosereiches und aschearmes Diluat gewonnen, das im Weiteren für die Standardisierung verwendet wurde.

### Beispiel 1B

### Herstellung eines Proteinkonzentrats mit vermindertem Aschegehalt

1.000 L Magermilch mit einer Trockenmasse von 9 Gew.-% wurde in einen Eindampfer gegeben und schonend bei etwa 70 °C auf eine Trockenmasse von 50 Gew.-% aufkonzentriert. Dem Konzentrat wurde das Diluat aus Beispiel 1A in einer solchen Menge zugegeben, dass bezogen auf die Trockenmasse ein Eiweißgehalt von 34 Gew.-% und ein Lactosegehalt von 51 Gew.-% erreicht wurde. Anschließend wurde das standardisierte Milchkonzentrat auf einen Sprühturm gegeben und bei 220 °C getrocknet. Das resultierende Pulver zeigte folgende Zusammensetzung:
Trockenmasse: 95,1 Gew.-%
Proteingehalt bezogen auf Trockenmasse: 34,3 Gew.-%
Lactosegehalt bezogen auf Trockenmasse: 51,8 Gew.-%
Aschegehalt bezogen auf Trockenmasse: 6,8 Gew.-%

75 g des Pulvers wurden bei 20°C in 100 g Wasser aufgelöst und homogenisiert. Das Produkt zeigt einen einwandfreien Geschmack ohne bittere oder adstringierende Note.

## Patentansprüche

1. Verfahren zur Herstellung von Magermilchproteinkonzentraten, umfassend oder bestehend aus den folgenden Schritten:
(i) Bereitstellen einer Magermilch mit einer Trockenmasse von 5 bis 15 Gew.-% und insbesondere 10 Gew.-%;
(ii) Aufkonzentrieren der Magermilch aus Schritt (i) auf eine Trockenmasse von 45 bis 60 Gew.-%;
(iii) Standardisieren des Magermilchkonzentrats aus Schritt (ii) mit einer Milchfraktion; sowie
(iv) Trocknen des standardisierten Magermilchkonzentrats aus Schritt (iii) unter Erhalt eines Magermilchproteinkonzentrats mit einer Trockenmasse von mindestens 95 Gew.-%,
**dadurch gekennzeichnet,**
**dass** man zur Standardisierung ein Milchpermeat, welches durch Ultrafiltration von Milch gewonnen wird, einsetzt, welches zuvor einer Elektrodialyse unterworfen worden ist, wobei das erhaltene Magermilchproteinkonzentrat einen Proteingehalt von mindestens 34 Gew.-%, einen Lactosegehalt von 45 bis 60 Gew.-% und einen Aschegehalt von maximal 7,5 Gew.-% aufweist.

2. Verfahren nach Anspruch 1, **dadurch gekennzeichnet, dass** man die Magermilch im Schritt (ii) auf eine Trockenmasse von 50 Gew.-% einstellt.

3. Verfahren nach mindestens einem der Ansprüche 1 bis 2, **dadurch gekennzeichnet, dass** man das standardisierte Magermilchkonzentrat sprühtrocknet.

4. Verfahren nach Anspruch 3, **dadurch gekennzeichnet, dass** man die Sprühtrockung bei Temperaturen im Bereich von 180 bis 260 °C durchführt.

5. Verfahren nach mindestens einem der Ansprüche 1 bis 4, **dadurch gekennzeichnet, dass** man dem standardisierten Magermilchkonzentrat vor, während oder nach der Trocknung weitere Zusatzstoffe beifügt.

6. Verfahren nach mindestens einem der Ansprüche 1 bis 5, **dadurch gekennzeichnet, dass** ein Pulver erhalten wird, welches einen Lactosegehalt von 48 bis 59 Gew.-% aufweist.

7. Verfahren nach mindestens einem der Ansprüche 1 bis 6, **dadurch gekennzeichnet, dass** ein Pulver erhalten wird, welches einen Aschegehalt von maximal 7 Gew.-% aufweist.

## Claims

1. A process for the production of skimmed milk protein concentrate, comprising or consisting of the following steps:
(i) providing a skimmed milk with a dry matter content of 5 to 15% by weight and particularly 10% by weight;
(ii) concentrating the skimmed milk of step (i) to a dry matter content of 45 to 60% by weight;
(iii) standardising the skimmed milk concentrate of step (ii) with a milk fraction; and
(iv) drying the standardised skimmed milk concentrate of step (iii), obtaining a skimmed milk protein concentrate with a dry matter content of at least 95% by weight,
**characterized in that**
a milk permeate, obtained by ultrafiltration of milk, is used for standardisation, which was previously subjected to electrodialysis,
wherein the skimmed milk protein concentrate obtained has a protein content of at least 34% by weight, a lactose content of 45 to 60% by weight and an ash content of a maximum of 7.5% by weight.

2. Process according to claim 1, **characterized in that** the skimmed milk is adjusted to a dry matter content of 50% by weight in step (ii).

3. Process according to at least one of claims 1 to 2, **characterized in that** the standardised skimmed milk concentrate is spray-dried.

4. Process according to claim 3, **characterized in that** the spray-drying is performed at temperatures within the range of 180 to 260 °C.

5. Process according to at least one of claims 1 to 4, **characterized in that** further additives are added to the standardised skimmed milk concentrate before, during or after drying.

6. Process according to at least one of claims 1 to 5, **characterized in that** a powder having a lactose content of 48 to 59% by weight is obtained.

7. Process according to at least one of claims 1 to 6, **characterized in that** a a powder having an ash content of a maximum of 7% by weight is obtained.

## Revendications

1. Procédé pour la préparation de concentrés de protéines de lait maigre, comprenant ou constitué des étapes suivantes :
(i) mise à disposition d'un lait maigre doté d'une masse sèche de 5 à 15 % en poids et en particulier de 10 % en poids ;
(ii) concentration du lait maigre de l'étape (i) jusqu'à une masse sèche de 45 à 60 % en poids ;
(iii) standardisation du concentré de lait maigre de l'étape (ii) avec une fraction de lait ; ainsi que
(iv) séchage du concentré de lait maigre standardisé de l'étape (iii) avec obtention d'un concentré de protéines de lait maigre doté d'une masse sèche d'au moins 95 % en poids,
**caractérisé en ce qu'**on utilise pour la standardisation un perméat de lait, qui est obtenu par ultrafiltration de lait, et qui a été soumis au préalable à une électrodialyse,
le concentré de protéines de lait maigre obtenu présentant une teneur en protéines d'au moins 34 % en poids, une teneur en lactose de 45 à 60 % en poids et une teneur en cendres de maximum 7,5 % en poids.

2. Procédé selon la revendication 1, **caractérisé en ce qu'**on ajuste le lait maigre dans l'étape (ii) à une masse sèche de 50 % en poids.

3. Procédé selon au moins l'une des revendications 1 et 2, **caractérisé en ce qu'**on sèche par pulvérisation le concentré de lait maigre standardisé.

4. Procédé selon la revendication 3, **caractérisé en ce qu'**on met en oeuvre le séchage par pulvérisation à des températures dans la plage de 180 à 260 °C.

5. Procédé selon au moins l'une des revendications 1 à 4, **caractérisé en ce qu'**on ajoute d'autres additifs au concentré de lait maigre standardisé avant, pendant ou après le séchage.

6. Procédé selon au moins l'une des revendications 1 à 5, **caractérisé en ce qu'**une poudre est obtenue qui présente une teneur en lactose de 48 à 59 % en poids.

7. Procédé selon au moins l'une des revendications 1 à 6, **caractérisé en ce qu'**une poudre est obtenue qui présente une teneur en cendres de maximum 7 % en poids.
